# EUROPEAN PATENT SPECIFICATION

(11) **EP 3 002 664 B1**
(45) Date of publication and mention of the grant of the patent: **03.04.2019**
(21) Application number: 13892571.4
(22) Date of filing: 31.08.2013
(51) Int. Cl.: G06F 17/24, G06F 3/0484

(54) **TEXT PROCESSING METHOD AND TOUCHSCREEN DEVICE**
TEXTVERARBEITUNGSVERFAHREN UND BERÜHRUNGSBILDSCHIRMVORRICHTUNG
PROCÉDÉ DE TRAITEMENT DE TEXTE ET DISPOSITIF À ÉCRAN TACTILE

(43) Date of publication of application: 06.04.2016
(73) Proprietor: Huawei Technologies Co., Ltd., Longgang District Shenzhen, Guangdong 518129 (CN)
(72) Inventor: LIU, Tingji, Shenzhen Guangdong 518129 (CN)
(74) Representative: Pfenning, Meinig & Partner mbB
(86) International application number: PCT/CN2013/082754
(87) International publication number: WO 2015/027505

(56) References cited:
- CN-A- 101 644 959
- CN-A- 102 043 584
- CN-A- 102 073 442
- US-A- 5 731 805
- US-A- 5 760 773
- US-A1- 2011 107 209
- US-B1- 7 075 512

## Description

### TECHNICAL FIELD

The present invention relates to the field of touchscreen devices, and in particular, to a text processing method and a touchscreen device.

### BACKGROUND

A touchscreen device (for example, a mobile phone, a tablet computer or an automatic teller machine having a touchscreen) works by using an X-Y electrode grid on the touchscreen device, and uses a voltage on the touchscreen device. When a finger approaches an electrode, a capacitance changes, and can be measured. By comparing measured values of all electrodes, a location point of the finger can be accurately positioned, that is, a touch location or the like is determined. At present, as functions of a portable terminal such as a mobile phone of a user are further enhanced, the user completes operations such as processing text, editing a short message service message, and searching for information by using the portable terminal such as a mobile phone in an increasing number of circumstances. However, due to a portability requirement, a size of a touchscreen of the portable terminal such as a mobile phone is strictly limited, and the touchscreen cannot be made large enough; therefore, text is densely arranged on the touchscreen device. As a consequence in this case, to edit or view the text, it is very difficult for the user to accurately move a cursor to a desired location by using a finger.
US 7075512 B1 discloses a method and a system for navigating a display screen to search for a desired item of information stored in an electronic device. The electronic device includes a novel fly over user interface (FOUI) capable of receiving commands from a user to provide a zoom out view of the display screen. A user may commence a navigation session by touching the display screen in a non active area or by clicking on a specifically designated icon to activate the user interface. During the navigation session, the display screen is zoomed-out and a magnifying area may appear on the display screen. The user interface enables the user to scroll the zoomed-out display screen by dragging the magnifying area towards an edge of the display screen to find a desired item of information. The display screen may be a display screen of a digital device (e.g., portable computer, personal computer, a cellular telephone, a digital watch, etc). The user may terminate a navigation session by removing the pointer from the display screen.
US 2011/0107209 A1 discloses an enlargement display method of a target area of an image forming apparatus which comprises a touch screen includes selecting a target zooming function to zoom at least one menu displayed on the touch screen as a target screen to perform at least one of functions of the image forming apparatus, enlarging and displaying at least one menu corresponding to the target area according to the selection, selecting at least one of navigation buttons to move the target area, and moving and displaying the enlarged target area through the selected navigation button. With this, the image forming apparatus and the enlargement display method enlarge and display the necessary menu as the target area and the target area is moved through the navigation button to thereby improve a user's convenience.
US 5731805 A discloses an apparatus, methods, systems and computer program products that automatically expands the computer displayed information that interests a computer user. Thus making the information easier for the user to see. The computer detects which area on a display device has the user's interest by using a gaze-tracking device to monitor where the user looks on the display. After determining which area interests the user the invention expands the display of the information in that area.
CN 102073442 A discloses a method for inputting an instruction through a touch screen of a portable electronic device, comprising the following steps of: displaying a plurality of touch buttons on a touch screen, inducing a touched touch point on the touch screen when the touch screen receives a touch input, identifying an initial touch button closest to the touch point, enlarging the initial touch button and a touch button arranged in the same column with the initial touch button and closely adjacent to the initial touch button, reducing the left touch buttons arranged in the same column with the initial touch button, and enabling a final touch button closest to a position of canceling the touch input. Therefore, users can more precisely operate and control the touch screen.

### SUMMARY

The present technical solutions provide a text processing method and a touchscreen device, to resolve a technical problem in the prior art that it is inconvenient for a user to view and select text due to a dense arrangement of the text, thereby bringing beneficial effects of facilitating user viewing and selection, improving operation efficiency of the user, and improving user experience.

According to a first aspect, an embodiment of the present invention provides a text processing method, where the method includes: displaying text; acquiring an input of a user; and enlarging and displaying text in a first preset area according to the input, and at the same time, reducing and displaying text in a second preset area, to enable display of the text to stay in an initial state, where: to enable display of the text to stay in an initial state means to enable a character in the text to stay displayed at a location in a row and/or a column in which the character in the text is displayed before the enlarging and displaying text in a first preset area and at the same time reducing and displaying text in a second preset area is executed; the enlarging and displaying text in a first preset area includes: enlarging and displaying a character and/or character spacing in the text in the first preset area; and the reducing and displaying text in a second preset area includes: reducing and displaying a character and/or character spacing in the text in the second preset area.

In a first possible implementation manner of the first aspect, when the acquiring an input of a user includes acquiring a touch location of the user, the first preset area is an area, of at least one character or at least one pixel, in proximity to the touch location; and the second preset area is an area, of at least one character or at least one pixel, in proximity to the first preset area and outside the first preset area.

With reference to the first possible implementation manner of the first aspect, in a second possible implementation manner of the first aspect, after the enlarging and displaying text in a first preset area according to the input, and at the same time, reducing and displaying text in a second preset area, the method further includes: acquiring a movement of the touch location; determining a location of the first preset area according to the movement of the touch location, and enlarging and displaying text in the first preset area; and at the same time, determining a location of the second preset area according to the movement of the touch location, and reducing and displaying text in the second preset area, to enable the display of the text to stay in the initial state.

With reference to the first possible implementation manner of the first aspect, in a third possible implementation manner of the first aspect, after the enlarging and displaying text in a first preset area according to the input, and at the same time, reducing and displaying text in a second preset area, the method further includes: displaying, in proximity to the touch location, a character or graphics; acquiring a movement of the touch location; determining a display location of the character or the graphics according to the movement of the touch location; and displaying the character or the graphics according to the display location.

With reference to the third possible implementation manner of the first aspect, in a fourth possible implementation manner of the first aspect, if the character or the graphics is in the first preset area, the character or the graphics is enlarged and displayed.

In a fifth possible implementation manner of the first aspect, when the acquiring an input of a user includes acquiring a particular character, the enlarging and displaying text in a first preset area specifically includes: enlarging and displaying the particular character; and
the reducing and displaying text in a second preset area specifically includes: reducing and displaying text in an area, of at least one character or at least one pixel, in proximity to the particular character.

With reference to the fifth possible implementation manner of the first aspect, in a sixth possible implementation manner of the first aspect, the acquiring a particular character specifically includes: acquiring the particular character according to a character entered by the user; or acquiring the particular character according to an instruction entered by the user.

With reference to the first aspect or the first possible implementation manner of the first aspect or the second possible implementation manner of the first aspect or the third possible implementation manner of the first aspect or the fourth possible implementation manner of the first aspect or the fifth possible implementation manner of the first aspect or the sixth possible implementation manner of the first aspect, in a seventh possible implementation manner of the first aspect, during the enlarging and displaying text in a first preset area according to the input, and at the same time, reducing and displaying text in a second preset area, to enable display of the text to stay in an initial state, the method further includes: displaying at least a part of the text according to an initial size.

According to a second aspect, a touchscreen apparatus is provided, where the apparatus includes: a display unit, configured to display text; and an acquiring unit, configured to acquire an input of a user, where the display unit is further configured to enlarge and display text in a first preset area according to the input of the user acquired by the acquiring unit, and at the same time, reduce and display text in a second preset area, to enable display of the text to stay in an initial state, where: to enable display of the text to stay in an initial state means to enable a character in the text to stay displayed at a location in a row and/or a column in which the character in the text is displayed before the enlarging and displaying text in a first preset area and at the same time reducing and displaying text in a second preset area is executed; the enlarging and displaying text in a first preset area includes: enlarging and displaying a character and/or character spacing in the text in the first preset area; and the reducing and displaying text in a second preset area includes: reducing and displaying a character and/or character spacing in the text in the second preset area.

In a first possible implementation manner of the second aspect, the acquiring unit is specifically configured to acquire a touch location of the user; and the display unit is specifically configured to: according to the touch location acquired by the acquiring unit, enlarge and display text in an area, of at least one character or at least one pixel, in proximity to the touch location, and at the same time, reduce and display text in an area, of at least one character or at least one pixel, in proximity to the first preset area and outside the first preset area.

With reference to the first possible implementation manner of the second aspect, in a second possible implementation manner of the second aspect, the acquiring unit is specifically further configured to acquire a movement of the touch location, and acquire a location of the first preset area according to the movement of the touch location and/or acquire a location of the second preset area according to the movement of the touch location; and the display unit is specifically further configured to enlarge and display text in the first preset area and at the same time, reduce and display text in the second preset area according to the location of the first preset area and the location of the second preset area that are acquired by the acquiring unit.

With reference to the first possible implementation manner of the second aspect or the second possible implementation manner of the second aspect, in a third possible implementation manner of the second aspect, the display unit is specifically further configured to display, in proximity to the touch location, a character or graphics; the acquiring unit is specifically further configured to acquire the movement of the touch location, and acquire a display location of the character or the graphics according to the movement of the touch location; and the display unit is specifically further configured to display the character or the graphics according to the display location acquired by the acquiring unit.

With reference to the third possible implementation manner of the second aspect, in a fourth possible implementation manner of the second aspect, the display unit is specifically further configured to: if the character or the graphics is in the first preset area, enlarge and display the character or the graphics.

In a fifth possible implementation manner of the second aspect, the acquiring unit is specifically further configured to acquire a particular character; and the display unit is specifically further configured to enlarge and display the particular character according to the particular character acquired by the acquiring unit, and at the same time, reduce and display text in an area, of at least one character or at least one pixel, in proximity to the particular character.

With reference to the fifth possible implementation manner of the second aspect, in a sixth possible implementation manner of the second aspect, the acquiring unit is specifically configured to: acquire the particular character according to a character entered by the user; or acquire the particular character according to an instruction entered by the user.

With reference to the second aspect or the first possible implementation manner of the second aspect or the second possible implementation manner of the second aspect or the third possible implementation manner of the second aspect or the fourth possible implementation manner of the second aspect or the fifth possible implementation manner of the second aspect or the sixth possible implementation manner of the second aspect, in a seventh possible implementation manner of the second aspect, the display unit is further configured to display at least a part of the text according to an initial size.

According to a third aspect, a touchscreen device is provided, where the touchscreen device includes: a touchscreen, configured to display text, where the touchscreen is further configured to acquire an input of a user; and a processor, configured to enlarge text in a first preset area according to the input of the user acquired by the touchscreen, and at the same time, reduce text in a second preset area, to enable display of the text to stay in an initial state, where: the touchscreen is further configured to display the text in the first preset area and at the same time display the text in the second preset area according to processing of the processor; to enable display of the text to stay in an initial state means to enable a character in the text to stay displayed at a location in a row and/or a column in which the character in the text is displayed before the enlarging text in a first preset area, and at the same time, reducing text in a second preset area is executed; the enlarging text in a first preset area includes: enlarging a character and/or character spacing in the text in the first preset area; and the reducing text in a second preset area includes: reducing a character and/or character spacing in the text in the second preset area.

In a first possible implementation manner of the third aspect, the touchscreen is specifically configured to acquire a touch location of the user; the processor is specifically configured to: according to the touch location acquired by the touchscreen, enlarge text in an area, of at least one character or at least one pixel, in proximity to the touch location, and at the same time, reduce text in an area, of at least one character or at least one pixel, in proximity to the first preset area and outside the first preset area; and the touchscreen is further configured to display the text in the first preset area and at the same time display the text in the second preset area according to the processing of the processor.

With reference to the first possible implementation manner of the third aspect, in a second possible implementation manner, the touchscreen is specifically further configured to acquire a movement of the touch location; the processor is specifically further configured to determine a location of the first preset area and a location of the second preset area according to the movement of the touch location acquired by the touchscreen; and the touchscreen is specifically further configured to enlarge and display text in the first preset area and at the same time reduce and display text in the second preset area according to the location of the first preset area and the location of the second preset area that are acquired by the processor.

With reference to the first possible implementation manner of the third aspect or the second possible implementation manner of the third aspect, in a third possible implementation manner of the third aspect, the touchscreen is specifically further configured to display, in proximity to the touch location, a character or graphics; the touchscreen is specifically further configured to acquire the movement of the touch location; the processor is specifically further configured to acquire a display location of the character or the graphics according to the movement of the touch location; and the touchscreen is specifically further configured to display the character or the graphics according to the display location of the processor.

With reference to the third possible implementation manner of the third aspect, in a fourth possible implementation manner, the processor is specifically further configured to: if the character or the graphics is in the first preset area, enlarge the character or the graphics; and the touchscreen is specifically further configured to display the enlarged character or graphics.

In a fifth possible implementation manner of the third aspect, the touchscreen is specifically further configured to acquire a particular character; the processor is specifically further configured to enlarge the particular character according to the particular character acquired by the touchscreen, and at the same time, reduce text in an area, of at least one character or at least one pixel, in proximity to the particular character; and the touchscreen is specifically configured to display the enlarged particular character and at the same time reduce and display the text in the area, of at least one character or at least one pixel, in proximity to the particular character according to the processing of the processor.

With reference to the fifth possible implementation manner of the third aspect, in a sixth possible implementation manner, the processor being specifically configured to according to the particular character acquired by the touchscreen specifically includes: acquiring the particular character according to a character entered by the user; or acquiring the particular character according to an instruction entered by the user.

With reference to the third aspect or the first possible implementation manner of the third aspect or the second possible implementation manner of the third aspect or the third possible implementation manner of the third aspect or the fourth possible implementation manner of the third aspect or the fifth possible implementation manner of the third aspect or the sixth possible implementation manner of the third aspect, in a seventh possible implementation manner of the third aspect, the display unit is further configured to display at least a part of the text according to an initial size.

In arrangements of the present invention, a part of text is enlarged while a part of the text is reduced according to a requirement of a user, which makes it convenient for the user to view/edit the text without changing an original arrangement of the text. This facilitates user operations performed on the text, for example, viewing and editing, improves operation efficiency of the user, and improves user experience.

### BRIEF DESCRIPTION OF DRAWINGS

To describe the technical solutions in the embodiments of the present invention or in the prior art more clearly, the following briefly introduces the accompanying drawings required for the embodiments. Apparently, the accompanying drawings in the following description show some embodiments of the present invention, and a person of ordinary skill in the art may still derive other drawings from these accompanying drawings without creative efforts.
FIG. 1 is a flowchart of a possible implementation manner of a text processing method according to Embodiment 1 of the present invention;
FIG. 2A to FIG. 2C and FIG. 2E to FIG. 2G are schematic diagrams of display obtained after the text processing method is performed in Embodiment 1 of the present invention;
FIG. 2D is a schematic diagram of display obtained before the text processing method is performed in Example 1 of the present invention;
FIG. 3 is a flowchart of another possible implementation manner of the text processing method according to Embodiment 1 of the present invention;
FIG. 4 is a flowchart of another possible implementation manner of the text processing method according to Embodiment 1 of the present invention;
FIG. 5 is a flowchart of another possible implementation manner of the text processing method according to Embodiment 1 of the present invention;
FIG. 6 is a schematic diagram of a structure of a touchscreen device according to Embodiment 2 of the present invention; and
FIG. 7 is a schematic diagram of a structure of a mobile phone according to Embodiment 3 of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The terms used in the embodiments of the present invention are merely for the purpose of illustrating specific embodiments, and are not intended to limit the present invention. The terms "a", "said" and "the" of singular forms used in the embodiments and the appended claims of the present invention are also intended to include plural forms, unless otherwise specified in the context clearly. It should also be understood that the term "and/or" used herein indicates and includes any or all possible combinations of one or more associated listed items. It should be further understood that the term "include" adopted in the specification specifies presence of features, integers, steps, operations, elements and/or components, with presence or attachment of other features, integers, steps, operations, components, elements, and their combinations not excluded.

It should be understood that, although terms such as first and second may be used in the embodiments of the present invention to describe various preset areas, these preset areas should not be limited to these terms. These terms are only used to differentiate the preset areas from each other. For example, without departing from the scope of the embodiments of the present invention, a first preset area may be also referred to as a second preset area, and similarly, a second preset area may be also referred to as a first preset area.

In the arrangements of the present invention, a touchscreen device includes, but is not limited to a mobile communications device such as a mobile phone, a personal digital assistant (Personal Digital Assistant, PDA), a tablet computer, or a portable device (for example, a portable computer), also includes a device having a touchscreen, for example, an automatic teller machine (Automatic Teller Machine, ATM), and may further include a device having a touchscreen, for example, a digital camera, which is not limited in the embodiments of the present invention.

The touchscreen may be an input/input interface for a user to interact with a device. One or more graphics may be displayed on a user interface, and the user may select the graphics by, for example, coming into contact with or touching the one or more graphics using one or more fingers. In some arrangements, the one or more graphics are selected when the user breaks contact with the one or more graphics, and in some arrangements the one or more graphics are selected when the user establishes contact with the one or more graphics. In some arrangements, the contact may include gestures, for example, one or more taps, one or more swipes (from left to right, from right to left, upwards and/or downwards), and scrolling (from right to left, from left to right, upwards and/or downwards) by using a finger that is already in contact with the touchscreen. In some arrangements unintentional contact with graphics will not select the graphics. It should be noted that, the contact in the present invention includes direct contact or indirect contact with the touchscreen, and further includes a floating operation above the touchscreen, which is not limited in the embodiments of the present invention.

### Arrangement 1

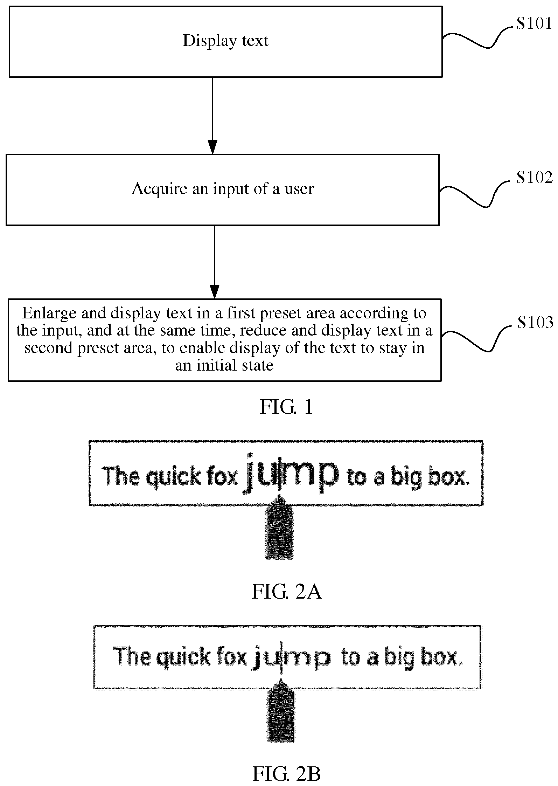

FIG. 1 is a flowchart of a text processing method according to Embodiment 1 of the present invention.

As shown in FIG. 1, the text processing method may include:
S101: Display text.

The text is displayed on a touchscreen device, where the text may be editable text or text that cannot be edited. The text is a document type of a computer, and this type of document is mainly used to record and/or store information such as text or a character. Generally, the document type is not used to record and/or store an image, a sound, and formatted data. A common extension of the text is .txt, .doc, .docx, .wps or the like.

S102: Acquire an input of a user.

The touchscreen device acquires the input of the user, where the input of the user may be obtained by using a touchscreen, or may be obtained by using another peripheral of the touchscreen device. When a touchscreen terminal acquires the input of the user by using the touchscreen, the user may complete the input by, for example, coming into contact with or touching one or more graphics using one or more fingers, may complete the input by using a sliding track, or may complete the input by using a gesture.

Optionally, the acquiring an input of a user may include a combination of any one or more of the following: acquiring a touch location of the user, acquiring an instruction, and acquiring a particular character. The instruction may include an edit instruction, a search instruction, a check instruction, or the like.

S103: Enlarge and display text in a first preset area according to the input, and at the same time, reduce and display text in a second preset area, to enable display of the text to stay in an initial state. To enable display of the text to stay in an initial state means to enable a character in the text to stay displayed at a location in a row and/or a column in which the character in the text is displayed before the enlarging and displaying text in a first preset area and at the same time reducing and displaying text in a second preset area is executed; the enlarging and displaying text in a first preset area includes: enlarging and displaying a character and/or character spacing in the text in the first preset area; and the reducing and displaying text in a second preset area includes: reducing and displaying a character and/or character spacing in the text in the second preset area.

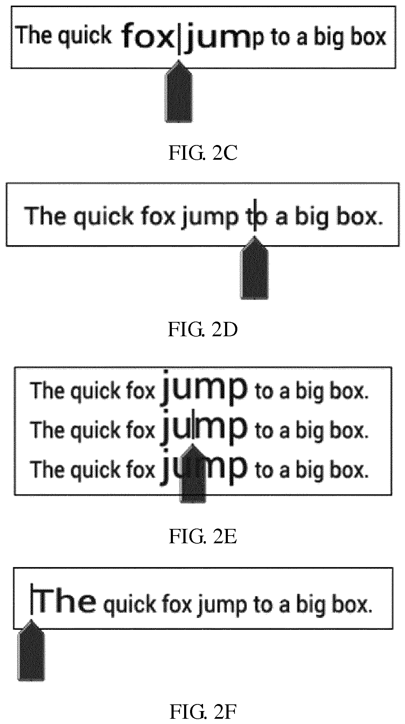

FIG. 2A to FIG. 2C are schematic diagrams of display obtained after the text in the first preset area is enlarged and displayed, and at the same time the text in the second preset area is reduced and displayed. FIG. 2D is a schematic diagram of display obtained before the text in the first preset area is enlarged and displayed, and at the same time the text in the second preset area is reduced and displayed. As shown in FIG. 2A, in FIG. 2A, character spacing in the text in the first preset area is enlarged and displayed, and at the same time character spacing in the text in the second preset area is reduced and displayed. As shown in FIG. 2B, in FIG. 2B, characters in the text in the first preset area are enlarged and displayed, and at the same time characters in the text in the second preset area are reduced and displayed. As shown in FIG. 2C, in FIG. 2C, the characters and character spacing in the text in the first preset area are enlarged and displayed, and at the same time the characters and character spacing in the text in the second preset area are reduced and displayed. The initial state refers to a location in a row and/or a column in which the text is displayed in step S101, and for details, reference may be made to FIG. 2D. As shown in FIG. 2A to FIG. 2C, a part of the text is reduced while a part of the text is enlarged, so that the display of the text stays in the initial state, that is, a character in the text is still displayed in a row, as shown in FIG. 2D, in which the character of the text is displayed. It should be noted that, for text arranged according to different writing or reading habits, the enabling display of the text to stay in an initial state may further include enabling a character in the text to be still displayed in a column at an initial location in which the character is displayed, or enabling a character in the text to be still displayed in a row and a column at an initial location in which the character is displayed. It should be noted that the first preset area may be in the shape of a rectangle or a circle, or may be in any shape preset by a system or preset by the user.

In this arrangement of the present invention, a part of text is enlarged while a part of the text is reduced according to a requirement of a user, which makes it convenient for the user to view/edit the text without changing an original arrangement of the text. This facilitates user operations performed on the text, for example, viewing and editing, improves operation efficiency of the user, and improves user experience.

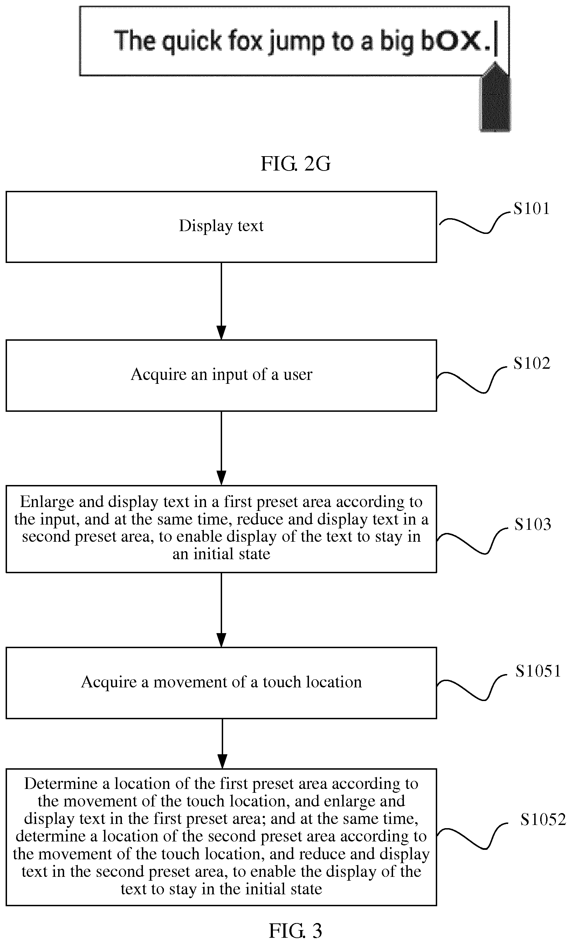

Optionally, when the acquiring an input of a user in step S102 includes acquiring the touch location of the user, in step S103, the first preset area is an area, of at least one character or at least one pixel, in proximity to the touch location, and the second preset area is an area, of at least one character or at least one pixel, in proximity to the first preset area and outside the first preset area. Specifically, the area, of at least one character or at least one pixel, in proximity to the touch location may be, as shown in FIG. 2A to FIG. 2C and in FIG. 2E, an area, of at least one character or at least one pixel, with the touch location as a center (where the center may be an absolute center, or may be not an absolute center, that is, areas on two sides of or above and below the touch location may be asymmetric); or may be, as shown in FIG. 2F and FIG. 2G, an area, of at least one character or at least one pixel, on one side of the touch location (where especially when the touch location is on an edge of the touchscreen, only an area on one side of the touch location may be enlarged and displayed); or may be an area, of at least one character or at least one pixel, at the location of the touch (that is, a character or a pixel located at the touch location is enlarged and displayed). The one character may further include one word or one phrase recognized by using an intelligent recognition mechanism of the touchscreen device. It should be noted that the area of at least one character or at least one pixel may be set by the user, or may be preset by a program, which is not limited in this embodiment of the present invention. Further optionally, an enlarged and displayed area in this embodiment of the present invention may be a circle, a rectangle, or the like. The second preset area is the area, of at least one character or at least one pixel, in proximity to the first preset area and outside the first preset area, where the area in proximity to the first preset area and outside the first preset area may include an area, excluding the first preset area, with the first preset area as a center, or may include an area, excluding the first preset area, on one side of the first preset area. Similarly, the character and the pixel in the second preset area and the character and the pixel in the first preset area may have same or similar meanings.

In this arrangement of the present invention, content of an enlarged region is adjusted according to a touch location of a user, so that the enlarged region may change according to a requirement of the user, which facilitates user operations performed on text, for example, viewing and editing, improves operation efficiency of the user, and improves user experience.

Optionally, as shown in FIG. 2A to FIG. 2C and in FIG. 2E to FIG. 2G, during step S103, the method may further include: S104: display at least a part of the text according to an initial size.

According to the initial state, after a character in a part of the text is enlarged and a character in a part of the text is reduced, a part of the text may further be displayed according to the initial size while the display of the text is kept in the initial state, where the initial size may include a size of a character in the initial state and/or a size of character spacing in the initial state.

Optionally, as shown in FIG. 3, when the acquiring an input of a user in step S102 includes acquiring the touch location of the user, after step S103, the method further includes: S1051: acquire a movement of the touch location; and S1052: determine a location of the first preset area according to the movement of the touch location, and enlarge and display text in the first preset area; and at the same time, determine a location of the second preset area according to the movement of the touch location, and reduce and display text in the second preset area, to enable the display of the text to stay in the initial state.

According to the movement of the touch location of the user, content of the enlarged and displayed text is changed and at the same time, content of the reduced and displayed text is changed. The movement of the touch location of the user may be a contact or contactless movement, on the touchscreen, of a finger (or another auxiliary device) of the user. The content of the enlarged and displayed text is changed according to the movement of the user, so that the user may change the content of the enlarged and displayed text according to a requirement anytime. Optionally, when the finger (or the another auxiliary device) of the user leaves the touchscreen or is at a particular distance away from the touchscreen, the enlarging and displaying, and the reducing and displaying of the parts of the text may be canceled, and the entire text is displayed according to the initial size, or a display state before the user leaves the touchscreen may remain.

In this arrangement of the present invention, content of an enlarged region is adjusted according to a touch location of a user, so that the enlarged region may change according to a requirement of the user, which facilitates user operations performed on text, for example, viewing and editing, improves operation efficiency of the user, and improves user experience.

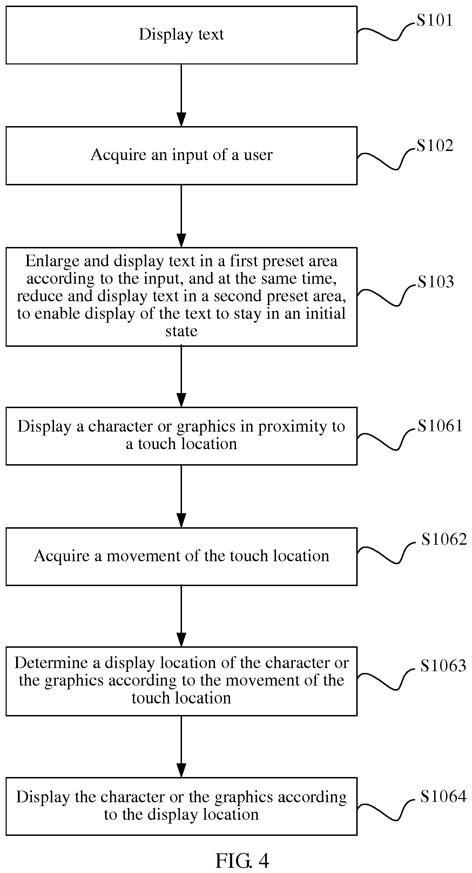

Optionally, as shown in FIG. 4, when the acquiring an input of a user in step S102 includes acquiring the touch location of the user, during or after step S103, the method further includes: S1061: display a character or graphics in proximity to the touch location; S1062: acquire a movement of the touch location; S1063: determine a display location of the character or the graphics according to the movement of the touch location; and S1064: display the character or the graphics according to the display location.

The displaying, in proximity to the touch location, a character or graphics includes displaying, in proximity to the touch location, a preset character or picture, where the presetting may be presetting by the system, or may be presetting by the user. The character may be a character related to text content at the touch location, for example, an explanation, a remark, or a phonetic symbol. The picture may be a picture in a vector format, or may be a picture in a pixel format; the picture may be a cursor, may be a handle, or may be another related picture.

Specifically, a cursor may be displayed between characters according to a touch of the user, where the cursor may be displayed in a blinking manner, or may be displayed in a non-blinking manner. When the touch location of the user changes, a display location of the cursor also changes with the change of the touch location of the user, and the cursor is moved to a new touch location for display. In this embodiment of the present invention, the display of the cursor may indicate a specific location of the touch of the user to the user, which helps the user to adjust the touch location of the user.

Specifically, a handle may also be displayed at the touch location, and at the same time, a cursor is displayed between characters that are in proximity to a display location of the handle; a movement of the touch location is acquired; and display locations of the handle and the cursor are moved according to the movement. A handle may be displayed according to a touch of the user, where in a vivid manner, the handle is used for dragging by the user, and a touch location is moved by dragging the handle. While the handle is displayed, a cursor may be further displayed between characters that are in proximity to a display location of the handle. The handle is moved according to a change of the touch location of the user, and at the same time, a display location of the cursor is moved. In this embodiment of the present invention, a handle is displayed in addition to a cursor, which prevents text from being covered when a user moves a touch location. In addition, the handle is added, so that the user moves the touch location in a more vivid manner, producing an effect of dragging.

Optionally, in step S1061 to step S1064, if the character or the graphics is in the first preset area, the character or the graphics is enlarged and displayed. For example, if text in which a cursor is located is enlarged and displayed, that is, the cursor is located in the first preset area, the cursor is also enlarged and displayed at the same time, so that the user sees the cursor more clearly, and the user selects the touch location more conveniently, thereby improving operation efficiency of the user.

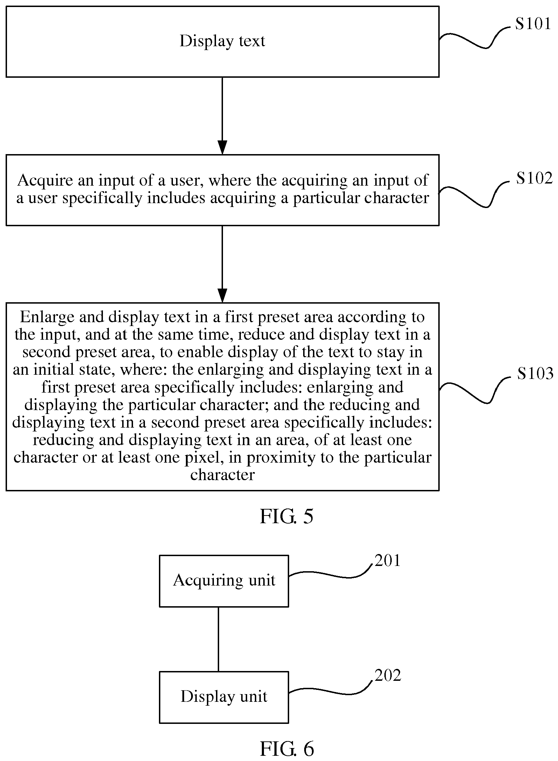

Optionally, as shown in FIG. 5, when the acquiring an input of a user in step S102 includes acquiring a particular character, in step S103, the enlarging and displaying text in a first preset area specifically includes: enlarging and displaying the particular character; and the reducing and displaying text in a second preset area specifically includes: reducing and displaying text in an area, of at least one character or at least one pixel, in proximity to the particular character. The acquiring a particular character specifically includes: acquiring the particular character according to a character entered by the user; or acquiring the particular character according to an instruction entered by the user. The particular character may be the character entered by the user, or may be the character acquired according to the instruction entered by the user. Specifically, the particular character may be a character that is entered by the user and needs to be searched for by the user, or may be a character that is entered by the user and is expected, by the user, to be displayed in a special manner, or may be a character that is entered by the user and needs to be edited. The particular character may further be a particular erroneous character, where the user enters an error check instruction, and the device checks whether an error exists in the text according to the error check instruction, and enlarges and display the particular erroneous character according to a check result. While the particular character is enlarged and displayed, text in an area, of at least one character or at least one pixel, in proximity to the particular character is reduced and displayed. In this embodiment of the present invention, diversified viewing and editing requirements of a user are satisfied by enlarging and displaying a particular character, which facilitates search, an error check, and the like, and improves use efficiency of the user.

### Arrangement 2

FIG. 6 is a schematic diagram of a structure of a touchscreen apparatus according to Arrangement 2. As shown in FIG. 6, the touchscreen apparatus in this embodiment of the present invention includes:
a display unit 201, configured to display text; and
an acquiring unit 202, configured to acquire an input of a user, where
the display unit 201 is further configured to enlarge and display text in a first preset area according to the input of the user acquired by the acquiring unit 202, and at the same time, reduce and display text in a second preset area, to enable display of the text to stay in an initial state, where:
   to enable display of the text to stay in an initial state means to enable a character in the text to stay displayed at a location in a row and/or a column in which the character in the text is displayed before the enlarging and displaying text in a first preset area and at the same time reducing and displaying text in a second preset area is executed;
   the enlarging and displaying text in a first preset area includes: enlarging and displaying a character and/or character spacing in the text in the first preset area; and
   the reducing and displaying text in a second preset area includes: reducing and displaying a character and/or character spacing in the text in the second preset area.

Optionally, the display unit 201 is further configured to display at least a part of the text according to an initial size.

Optionally, the acquiring unit 202 is specifically configured to acquire a touch location of the user; and the display unit 201 is specifically configured to: according to the touch location acquired by the acquiring unit 202, enlarge and display text in an area, of at least one character or at least one pixel, in proximity to the touch location, and at the same time, reduce and display text in an area, of at least one character or at least one pixel, in proximity to the first preset area and outside the first preset area.

The display unit 201 is specifically configured to implement the methods of step S101, step S103, and step S104 in Arrangement 1 of the present invention, and the acquiring unit 202 is specifically configured to execute the method of step S102 in Arrangement 1 of the present invention. For specific methods, reference is made to Embodiment 1 of the present invention, and details are not described herein again.

Optionally, the acquiring unit 202 is specifically further configured to acquire a movement of the touch location, and acquire a location of the first preset area according to the movement of the touch location and/or acquire a location of the second preset area according to the movement of the touch location; and the display unit 201 is specifically further configured to enlarge and display text in the first preset area and at the same time reduce and display text in the second preset area according to the location of the first preset area and the location of the second preset area that are acquired by the acquiring unit. The display unit 201 is specifically configured to implement the method of step S1052 in Arrangement 1 of the present invention, and the acquiring unit 202 is specifically configured to execute the method of step S1051 in Embodiment 1 of the present invention. For specific methods, reference is made to Embodiment 1 of the present invention, and details are not described herein again.

Optionally, the display unit 201 is specifically further configured to display, according to the touch location acquired by the acquiring unit 202, a character or graphics in proximity to the touch location; the acquiring unit 202 is specifically further configured to acquire the movement of the touch location; and the display unit 201 is specifically further configured to display the character or the graphics according to the movement acquired by the acquiring unit 202. The display unit 201 is specifically configured to implement the methods of step S1061 and S1063 in Embodiment 1 of the present invention, and the acquiring unit 202 is specifically configured to execute the method of step 1062 in Arrangement 1 of the present invention. For specific methods, reference is made to Arrangement 1 of the present invention, and details are not described herein again.

Optionally, the display unit 201 is specifically further configured to display, according to the touch location acquired by the acquiring unit 202, a handle at the touch location, and display a cursor between characters that are in proximity to a display location of the handle; the acquiring unit 202 is specifically further configured to acquire the movement of the touch location; and the display unit 201 is specifically further configured to display the handle and the cursor according to the movement acquired by the acquiring unit 202.

Optionally, the display unit 201 is specifically further configured to: if the character or the graphics is in the first preset area, enlarge and display the character or the graphics.

Optionally, the acquiring unit 202 is specifically further configured to acquire a particular character; and the display unit 201 is specifically further configured to enlarge and display the particular character according to the particular character acquired by the acquiring unit 202, and at the same time, reduce and display text in an area, of at least one character or at least one pixel, in proximity to the particular character. The display unit 201 is specifically configured to implement the methods of step S101 and S103 in Embodiment 1 of the present invention, and the acquiring unit 202 is specifically configured to execute the method of step 102 in Embodiment 1 of the present invention. For specific methods, reference is made to Embodiment 1 of the present invention, and details are not described herein again.

In this arrangement of the present invention, by means of a touch apparatus, a part of text is enlarged while a part of the text is reduced according to a requirement of a user, which makes it convenient for the user to view/edit the text without changing an original arrangement of the text. This facilitates user operations performed on the text, for example, viewing and editing, improves operation efficiency of the user, and improves user experience.

### Arrangement 3

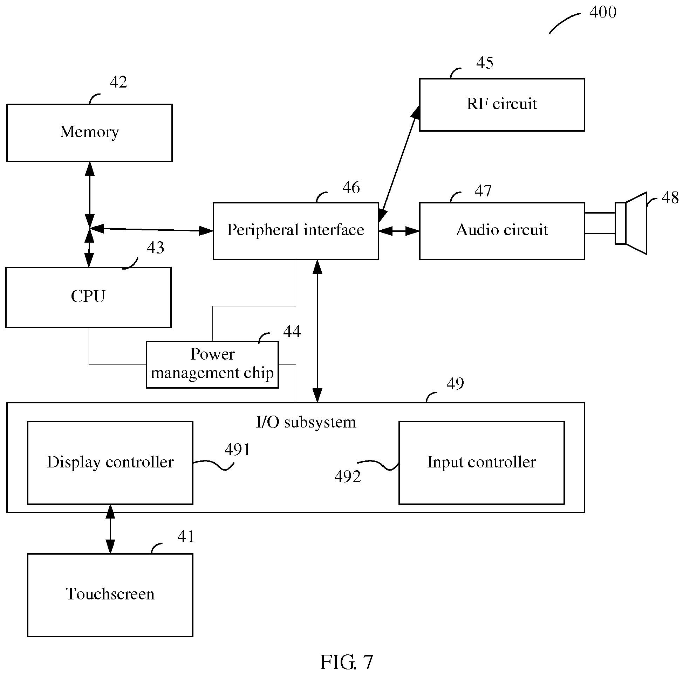

A touchscreen device for processing a user interface is provided, including: a touchscreen, a memory, a processor, a power management chip, an RF circuit, a peripheral interface, an audio circuit, a loudspeaker, and an I/O subsystem. The touchscreen is configured to display text and is further configured to acquire an input of a user; the processor is configured to enlarge text in a first preset area according to the input of the user acquired by the touchscreen, and at the same time, reduce text in a second preset area, to enable display of the text to stay in an initial state; and the touchscreen is further configured to display the text in the first preset area and at the same time display the text in the second preset area according to processing of the processor. This embodiment of the present invention is described in detail by using a mobile phone as an example. FIG. 7 is a schematic diagram of a structure of the touchscreen device according to Embodiment 3. As shown in FIG. 7, a mobile phone includes: a touchscreen 41, a memory 42, a processor 43, a power management chip 44, an RF circuit 45, a peripheral interface 46, an audio circuit 47, a loudspeaker 48, and an I/O subsystem 49. It should be understood that the mobile phone shown in FIG. 6 is merely an example of the touchscreen device, and the mobile phone may have more or less components than those shown in the figure, may combine two or more components, or may have different component configurations. The various components shown in the figure may be implemented by hardware including one or more signal processing and/or application-specific integrated circuits, software, or a combination of software and hardware.

The touchscreen 41 is configured to display text, is further configured to acquire an input of a user, and is further configured to display text in a first preset area and at the same time display text in a second preset area according to processing of the processor. The touchscreen 41 is configured to execute the method in Embodiment 1, and for details, reference is made to the methods of step S101, step S102, step S103, and step S104 in Embodiment 1. For the specific methods, reference is made to the methods in Embodiment 1, and details are not described herein again. The touchscreen 41 is an input interface and an output interface between the mobile phone and the user. In addition to having functions of acquiring touch information and a control instruction of the user, the touchscreen presents a visual output to the user, where the visual output may include graphics, text, an icon, a video, and the like.

The memory 42 may be configured to store the touch information. The touch information includes: information about a touch location, information about touch pressure, and the like. The memory 42 may be accessed by the processor 43, the peripheral interface 46, and the like, and the memory 42 may include a high-speed random access memory, or may include a non-volatile memory such as one or more magnetic disk storage devices, a flash memory device, or another volatile solid-state storage device.

The processor 43 may be configured to enlarge the text in the first preset area according to the input of the user acquired by the touchscreen, and at the same time, reduce the text in the second preset area, to enable display of the text to stay in an initial state. The processor 43 is configured to execute the method in Embodiment 1, and for details, reference is made to the method of step S103 in Arrangement 1 Reference is made to the method in Embodiment 1 for the specific method, and details are not described herein again. The processor 43 is a control center of the mobile phone 400, and is connected to each part of the mobile phone by using various interfaces and lines. By running or executing a software program and/or module stored in the memory 42, and invoking data stored in the memory 42, the processor 43 performs various functions and data processing of the mobile phone 400, thereby performing overall monitoring on the mobile phone. Optionally, the processor 43 may include one or more processing units. Preferably, the processor 43 may integrate an application processor and a modem processor. Optionally, the application processor mainly processes an operating system, a user interface, an application program, and the like. The modem processor mainly processes wireless communication. It may be understood that the foregoing modem processor may not be integrated into the processor 43. It should be further noted that the foregoing function is only one of functions that can be performed by the processor 43, and other functions are not limited in this embodiment of the present invention.

The power management chip 44 may be configured to supply power to and perform power management on hardware to which the processor 43, the I/O subsystem 49, and the peripheral interface 46 are connected.

The RF circuit 45 is mainly configured to establish communication between the mobile phone and a wireless network (that is, a network side), to implement data acquiring and sending between the mobile phone and the wireless network, for example, receiving and sending a short message service message or an e-mail. Specifically, the RF circuit 45 acquires and sends an RF signal, where the RF signal is also referred to as an electromagnetic signal. The RF circuit 45 converts an electrical signal into an electromagnetic signal or converts an electromagnetic signal into an electrical signal, and communicates with a communications network and another device by using the electromagnetic signal. The RF circuit 45 may include a given circuit for performing these functions, which includes but is not limited to, an antenna system, an RF transceiver, one or more amplifiers, a tuner, one or more oscillators, a digital signal processor, a CODEC chip set, a subscriber identity module (Subscriber Identity Module, SIM), and the like.

For the peripheral interface 46, the peripheral interface may connect an input/output peripheral of the device to the processor 43 and the memory 42.

The audio circuit 47 may be mainly configured to acquire audio data from the peripheral interface 46, convert the audio data into an electrical signal, and send the electrical signal to the loudspeaker 48.

The loudspeaker 48 may be configured to restore a sound from a voice signal that is acquired by the mobile phone from the wireless network by using the RF circuit 45, and play the sound to the user.

For the I/O subsystem 49, the I/O subsystem 49 may control an input/output peripheral on the device, and the I/O subsystem 49 may include a display controller 491 and one or more input controllers 492 configured to control another input/control device. Optionally, the one or more input controllers 492 acquires an electrical signal from the another input/control device or sends an electrical signal to the another input/control device, where the another input/control device may include a physical button (a press button, a rocker button, or the like), a dial, a slider switch, a joystick, and a click scroll wheel. It should be noted that the input controller 492 may be connected to any one of the following: a keyboard, an infrared port, a USB interface, and an indication device such as a mouse. The display controller 491 of the I/O subsystem 49 acquires an electrical signal from the touchscreen 41 or sends an electrical signal to the touchscreen 41. The touchscreen 41 acquires a contact on the touchscreen, and the display controller 491 converts the acquired contact into interaction with a user interface object presented on the touchscreen 41, that is, human machine interaction is implemented. The user interface object presented on the touchscreen 41 may be an icon for running a game, an icon for a connection to a corresponding network, a filter mode, or the like. It should be noted that the device may further include an optical mouse, where the optical mouse is a touch-sensitive surface that presents no visual output, or is an extension of a touch-sensitive surface formed by the touchscreen.

In Arrangement 3 of the present invention, the touchscreen 41 may display the text shown in FIG. 2D, and acquire the input of the user. The processor 43 enlarges the text in the first preset area according to the input of the user acquired by the touchscreen, and at the same time, reduces the text in the second preset area, to enable the display of the text to stay in the initial state. The touchscreen 41 may further display the text in the first preset area and at the same time display the text in the second preset area according to the processing of the processor, for example, the text shown in FIG. 2A to FIG. 2C and in FIG. 2E to FIG. 2G. The foregoing structure may be configured to execute the method in Embodiment 1. For the specific method, reference is made to the method in Embodiment 1, and details are not described again herein.

In this embodiment of the present invention, by using a touch device, a part of text is enlarged while a part of the text is reduced according to a requirement of a user, which makes it convenient for the user to view/edit the text without changing an original arrangement of the text. This facilitates user operations performed on the text, for example, viewing and editing, improves operation efficiency of the user, and improves user experience.

With descriptions of the foregoing implementation manners, a person skilled in the art may clearly understand that the embodiments of the present invention may be implemented by hardware, firmware or a combination thereof. When the embodiments of the present invention are implemented by software, the foregoing functions may be stored in a terminal-readable medium or transmitted as one or more instructions or code in the terminal-readable medium. The terminal-readable medium includes a terminal storage medium and a communications medium. Optionally, the communications medium includes any medium that enables a terminal program to be transmitted from one place to another. The storage medium may be any available medium accessible to a terminal. The following provides an example but does not impose a limitation: The terminal-readable medium may include a RAM, a ROM, an EEPROM, a CD-ROM, or another optical disc storage or a disk storage medium, or another magnetic storage device, or any other medium that can carry or store expected program code in a form of an instruction or a data structure and can be accessed by a terminal. In addition, any connection may be appropriately defined as a terminal-readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in a definition of a medium to which they belong. For example, a disk (Disk) and disc (disc) used by the embodiments of the present invention includes a compact disc (CD), a laser disc, an optical disc, a digital versatile disc (DVD), a floppy disk and a Blu-ray disc. Optionally, the disk generally copies data by a magnetic means, and the disc copies data optically by a laser means. The foregoing combination should also be included in the protection scope of the terminal-readable medium.

In short, the foregoing descriptions are only embodiments of the technical solutions of the present invention, but are not intended to limit the protection scope of the present invention. Any modification, equivalent replacement, or improvement made without departing from the principle of the present invention shall fall within the protection scope of the present invention.

## Claims

1. A text processing method, wherein the method comprises:
displaying a row of text (S101);
acquiring an input of a user, wherein the acquiring an input of a user comprises acquiring a touch location of the user (S102); and
determining that the touch location of the user is on the row of the text, enlarging and displaying text in a first preset area of the row according to the touch location, and at the same time, reducing and displaying text in a second preset area of the row according to the touch location, to keep the row of text displayed in the original row;
the enlarging and displaying text in a first preset area of the row comprises: enlarging and displaying a character and character spacing in the text in the first preset area of the row; and
the reducing and displaying text in a second preset area of the row comprises: reducing and displaying a character and character spacing in the text in the second preset area of the row.

2. The method according to claim 1, wherein
the first preset area is an area, of at least one character or at least one pixel, in proximity to the touch location; and
the second preset area is an area, of at least one character or at least one pixel, in proximity to the first preset area and outside the first preset area.

3. The method according to claim 2, wherein after the enlarging and displaying text in a first preset area of the row according to the input, and at the same time, reducing and displaying text in a second preset area of the row, the method further comprises:
acquiring a movement of the touch location;
determining a location of the first preset area according to the movement of the touch location, and enlarging and displaying text in the first preset area; and at the same time,
determining a location of the second preset area according to the movement of the touch location, and reducing and displaying text in the second preset area, to enable the display of the text to stay in the initial state.

4. The method according to claim 2, wherein after the enlarging and displaying text in a first preset area according to the input, and at the same time, reducing and displaying text in a second preset area, the method further comprises:
displaying, in proximity to the touch location, a character or graphics;
acquiring a movement of the touch location;
determining a display location of the character or the graphics according to the movement of the touch location; and
displaying the character or the graphics according to the display location.

5. The method according to claim 4, wherein if the character or the graphics is in the first preset area, the character or the graphic is enlarged and displayed.

6. The method according to claim 1, wherein the acquiring an input of a user comprises acquiring a particular character,
the enlarging and displaying text in a first preset area specifically comprises: enlarging and displaying the particular character; and
the reducing and displaying text in a second preset area specifically comprises: reducing and displaying text in an area, of at least one character or at least one pixel, in proximity to the particular character.

7. The method according to claim 6, wherein the acquiring a particular character specifically comprises:
acquiring the particular character according to a character entered by the user; or
acquiring the particular character according to an instruction entered by the user.

8. The method according to any one of claims 1 to 7, wherein during the enlarging and displaying text in a first preset area according to the touch location, and at the same time, reducing and displaying text in a second preset area, to keep the row of the text displayed in the original row, the method further comprises:
displaying at least a part of the text according to an initial size.

9. A touchscreen apparatus, wherein the apparatus comprises:
a display unit (201), configured to display text; and
an acquiring unit (202), configured to acquire an input of a user, the acquiring unit is specifically configured to acquire a touch location of the user, wherein
the display unit is further configured to determine that the touch location of the user is on the row of the text, enlarge and display text in a first preset area of the row according to the touch location of the user acquired by the acquiring unit, and at the same time, reduce and display text in a second preset area of the row, to keep the row of text displayed in the original row;
the enlarging and displaying text in a first preset area of the row comprises: enlarging and displaying a character and character spacing in the text in the first preset area of the row; and
the reducing and displaying text in a second preset area of the row comprises: reducing and display a character and character spacing in the text in the second preset area of the row.

10. The touchscreen apparatus according to claim 9, wherein
the display unit is specifically configured to: according to the touch location acquired by the acquiring unit, according to the touch location acquired by text in an area, of at least one character or at least one pixel, in proximity to the touch location, and at the same time, reduce and display text in an area, of at least one character or at least one pixel, in proximity to the first preset area and outside the first preset area.

11. The touchscreen apparatus according to claim 10, wherein
the acquiring unit is specifically further configured to acquire a movement of the touch location, and acquire a location of the first preset area according to the movement of the touch location and/or acquire a location of the second preset area according to the movement of the touch location; and
the display unit is specifically further configured to enlarge and display text in the first preset area and at the same time, reduce and display text in the second preset area according to the location of the first preset area and the location of the second preset area that are acquired by the acquiring unit.

12. The touchscreen apparatus according to claim 10 or 11, wherein
the display unit is specifically further configured to display, in proximity to the touch location, a character or graphics;
the acquiring unit is specifically further configured to acquire the movement of the touch location, and acquire a display location of the character or the graphics according to the movement of the touch location; and
the display unit is specifically further configured to display the character or the graphics according to the display location acquired by the acquiring unit.

13. The touchscreen apparatus according to claim 12, wherein
the display unit is specifically further configured to: if the character or the graphics is in the first preset area, enlarge and display the character or the graphics.

14. The touchscreen apparatus according to claim 9, wherein
the acquiring unit is specifically further configured to acquire a particular character; and
the display unit is specifically further configured to enlarge and display the particular character according to the particular character acquired by the acquiring unit, and at the same time, reduce and display text in an area, of at least one character or at least one pixel, in proximity to the particular character.

15. The touchscreen apparatus according to any one of claims 9 to 14, wherein the display unit is further configured to display at least a part of the text according to an initial size.

## Patentansprüche

1. Textverarbeitungsverfahren, wobei das Verfahren Folgendes umfasst:
Anzeigen einer Zeile von Text (S101);
Erfassen einer Eingabe eines Benutzers, wobei das Erfassen einer Eingabe eines Benutzers Erfassen einer Berührungsposition des Benutzers (S102) umfasst; und
Bestimmen, dass die Berührungsposition des Benutzers auf der Zeile des Texts ist, Vergrößern und Anzeigen von Text in einem ersten vorgegebenen Bereich der Zeile entsprechend der Berührungsposition und, zur gleichen Zeit, Verkleinern und Anzeigen von Text in einem zweiten vorgegebenen Bereich der Zeile entsprechend der Berührungsposition, um die angezeigte Zeile von Text in der ursprünglichen Zeile zu halten;
wobei das Vergrößern und Anzeigen von Text in einem ersten vorgegebenen Bereich der Zeile umfasst: Vergrößern und Anzeigen eines Zeichens und eines Zeichenabstands im Text im ersten vorgegebenen Bereich der Zeile; und
wobei das Verkleinern und Anzeigen von Text in einem zweiten vorgegebenen Bereich der Zeile umfasst: Verkleinern und Anzeigen eines Zeichens und eines Zeichenabstands im Text im zweiten vorgegebenen Bereich der Zeile.

2. Verfahren nach Anspruch 1, wobei:
der erste vorgegebene Bereich ein Bereich, mit zumindest einem Zeichen oder zumindest einem Pixel, in Nähe der Berührungsposition ist; und
der zweite vorgegebene Bereich ein Bereich, mit zumindest einem Zeichen oder zumindest einem Pixel, in Nähe des ersten vorgegebenen Bereichs und außerhalb des ersten vorgegebenen Bereichs ist.

3. Verfahren nach Anspruch 2, wobei nach dem Vergrößern und Anzeigen von Text in einem ersten vorgegebenen Bereich der Zeile entsprechend der Eingabe und, zur gleichen Zeit, Verkleinern und Anzeigen von Text in einem zweiten vorgegebenen Bereich der Zeile, das Verfahren ferner Folgendes umfasst:
Erfassen einer Bewegung der Berührungsposition;
Bestimmen einer Position des ersten vorgegebenen Bereichs entsprechend der Bewegung der Berührungsposition und Vergrößern und Anzeigen von Text in dem ersten vorgegebenen Bereich; und zur gleichen Zeit,
Bestimmen einer Position des zweiten vorgegebenen Bereichs entsprechend der Bewegung der Berührungsposition und Verkleinern und Anzeigen von Text in dem zweiten vorgegebenen Bereich, um der Anzeige des Textes zu ermöglichen, im ursprünglichen Zustand zu bleiben.

4. Verfahren nach Anspruch 2, wobei nach dem Vergrößern und Anzeigen von Text in einem ersten vorgegebenen Bereich entsprechend der Eingabe und, zur gleichen Zeit, Verkleinern und Anzeigen von Text in einem zweiten vorgegebenen Bereich, das Verfahren ferner Folgendes umfasst:
Anzeigen, in Nähe der Berührungsposition, eines Zeichens oder eine Grafik;
Erfassen einer Bewegung der Berührungsposition;
Bestimmen einer Anzeigeposition des Zeichens oder der Grafik entsprechend der Bewegung der Berührungsposition; und
Anzeigen des Zeichens oder der Grafik entsprechend der Anzeigeposition.

5. Verfahren nach Anspruch 4, wobei, wenn sich das Zeichen oder die Grafik in dem ersten vorgegebenen Bereich befindet, das Zeichen oder die Grafik vergrößert und angezeigt wird.

6. Verfahren nach Anspruch 1, wobei das Erfassen einer Eingabe eines Benutzers Erfassen eines bestimmten Zeichens umfasst,
das Vergrößern und Anzeigen von Text in einem ersten vorgegebenen Bereich speziell umfasst: Vergrößern und Anzeigen des bestimmten Zeichens; und
das Verkleinern und Anzeigen von Text in einem zweiten vorgegebenen Bereich speziell umfasst: Verkleinern und Anzeigen von Text in einem Bereich, von zumindest einem Zeichen oder zumindest einem Pixel, in Nähe des bestimmten Zeichens.

7. Verfahren nach Anspruch 6, wobei das Erfassen eines bestimmten Zeichens speziell Folgendes umfasst:
Erfassen des bestimmten Zeichens entsprechend einem durch den Benutzer eingegebenen Zeichen; oder
Erfassen des bestimmten Zeichens entsprechend einer durch den Benutzer eingegebenen Anweisung.

8. Verfahren nach einem der Ansprüche 1 bis 7, wobei während des Vergrößerns und Anzeigens von Text in einem ersten vorgegebenen Bereich entsprechend der Berührungsposition und, zur gleichen Zeit, Verkleinern und Anzeigen von Text in einem zweiten vorgegebenen Bereich, zum Halten der Zeile des angezeigten Textes in der ursprünglichen Zeile das Verfahren ferner Folgendes umfasst:
Anzeigen von zumindest einem Teil des Textes entsprechend einer ursprünglichen Größe.

9. Berührungsbildschirmvorrichtung, wobei die Vorrichtung Folgendes umfasst:
eine Anzeigeeinheit (201), ausgelegt zum Anzeigen von Text; und
eine Erfassungseinheit (202), ausgelegt zum Erfassen einer Eingabe eines Benutzers, wobei die Erfassungseinheit speziell dazu ausgelegt ist, eine Berührungsposition des Benutzers zu erfassen, wobei
die Anzeigeeinheit ferner ausgelegt ist zum Bestimmen, dass die Berührungsposition des Benutzers auf der Zeile des Texts ist, Vergrößern und Anzeigen von Text in einem ersten vorgegebenen Bereich der Zeile entsprechend der durch die Erfassungseinheit erfassten Berührungsposition des Benutzers und, zur gleichen Zeit, Verkleinern und Anzeigen von Text in einem zweiten vorgegebenen Bereich der Zeile, um die angezeigte Zeile von Text in der ursprünglichen Zeile zu halten;
wobei das Vergrößern und Anzeigen von Text in einem ersten vorgegebenen Bereich der Zeile umfasst: Vergrößern und Anzeigen eines Zeichens und eines Zeichenabstands im Text im ersten vorgegebenen Bereich der Zeile; und
wobei das Verkleinern und Anzeigen von Text in einem zweiten vorgegebenen Bereich der Zeile umfasst: Verkleinern und Anzeigen eines Zeichens und eines Zeichenabstands im Text im zweiten vorgegebenen Bereich der Zeile.

10. Berührungsbildschirmvorrichtung nach Anspruch 9, wobei
die Anzeigeeinheit speziell ausgelegt ist zum: entsprechend der durch die Erfassungseinheit erfassten Berührungsposition, entsprechend der durch Text in einem Bereich erfassten Berühngsposition von zumindest einem Zeichen oder zumindest einem Pixel, in Nähe der Berührungsposition und, zur gleichen Zeit, Verkleinern und Anzeigen von Text in einem Bereich, von zumindest einem Zeichen oder zumindest einem Pixel, in Nähe des ersten vorgegebenen Bereichs und außerhalb des ersten vorgegebenen Bereichs.

11. Berührungsbildschirmvorrichtung nach Anspruch 10, wobei
die Erfassungseinheit ferner speziell ausgelegt ist zum Erfassen einer Bewegung der Berührungsposition und Erfassen einer Position des ersten vorgegebenen Bereichs entsprechend der Bewegung der Berührungsposition und/oder Erfassen einer Position des zweiten vorgegebenen Bereichs entsprechend der Bewegung der Berührungsposition; und die Anzeigeeinheit ferner speziell ausgelegt ist zum Vergrößern und Anzeigen von Text im ersten vorgegebenen Bereich und zur gleichen Zeit Verkleinern und Anzeigen von Text im zweiten vorgegebenen Bereich entsprechend der Position des ersten vorgegebenen Bereichs und der Position des zweiten vorgegebenen Bereichs, die von der Erfassungseinheit erfasst werden.

12. Berührungsbildschirmvorrichtung nach Anspruch 10 oder 11, wobei
die Anzeigeeinheit ferner speziell ausgelegt ist zum Anzeigen, in Nähe der Berührungsposition, eines Zeichens oder einer Grafik;
die Anzeigeeinheit ferner speziell ausgelegt ist zum Erfassen der Bewegung der Berührungsposition und Erfassen einer Anzeigeposition des Zeichens oder der Grafik entsprechend der Bewegung der Berührungsposition; und
die Anzeigeeinheit ferner speziell ausgelegt ist zum Anzeigen des Zeichens oder der Grafik entsprechend der durch die Erfassungseinheit erfassten Anzeigeposition.

13. Berührungsbildschirmvorrichtung nach Anspruch 12, wobei
die Anzeigeeinheit ferner speziell ausgelegt ist zum: wenn das Zeichen oder die Grafik in dem ersten vorgegebenen Bereich ist, Vergrößern und Anzeigen des Zeichens oder der Grafik.

14. Berührungsbildschirmvorrichtung nach Anspruch 9, wobei
die Erfassungseinheit ferner speziell ausgelegt ist zum Erfassen eines bestimmten Zeichens; und
die Anzeigeeinheit ferner ausgelegt ist zum Vergrößern und Anzeigen des bestimmten Zeichens entsprechend dem durch die Erfassungseinheit erfassten bestimmten Zeichen und, zur gleichen Zeit, Verkleinern und Anzeigen von Text in einem Bereich, von zumindest einem Zeichen oder zumindest einem Pixel in Nähe des bestimmten Zeichens.

15. Berührungsbildschirmvorrichtung nach einem der Ansprüche 9 bis 14, wobei die Anzeigeeinheit ferner ausgelegt ist zum Anzeigen von zumindest einem Teil des Textes entsprechend einer anfänglichen Größe.

## Revendications

1. Procédé de traitement de texte, dans lequel le procédé comprend :
l'affichage d'une rangée de texte (S101) ;
l'acquisition d'une saisie d'un utilisateur, où la saisie d'un utilisateur comprend l'acquisition d'une localisation tactile de l'utilisateur (S102) ; et
la détermination du fait que la localisation tactile de l'utilisateur se trouve sur la rangée du texte, l'agrandissement et l'affichage de texte dans une première aire préréglée de la rangée en fonction de la localisation tactile, et en même temps, la réduction et l'affichage de texte dans une deuxième aire préréglée de la rangée en fonction de la localisation tactile, afin de maintenir l'affichage de la rangée de texte dans la rangée d'origine ;
l'agrandissement et l'affichage de texte dans une première aire préréglée de la rangée comprennent : l'agrandissement et l'affichage d'un caractère et d'un espacement de caractères dans le texte dans la première aire préréglée de la rangée ; et
la réduction et l'affichage de texte dans une deuxième aire préréglée de la rangée comprennent : la réduction et l'affichage d'un caractère et d'un espacement de caractères dans le texte dans la deuxième aire préréglée de la rangée.

2. Procédé selon la revendication 1, dans lequel
la première aire préréglée est une aire, d'au moins un caractère ou d'au moins un pixel, à proximité de la localisation tactile ; et
la deuxième aire préréglée est une aire, d'au moins un caractère ou d'au moins un pixel, à proximité de la première aire préréglée et à l'extérieur de la première aire préréglée.

3. Procédé selon la revendication 2, dans lequel après l'agrandissement et l'affichage du texte dans une première aire préréglée de la rangée en fonction de la saisie, et en même temps, la réduction et l'affichage du texte dans une deuxième aire préréglée de la rangée, le procédé comprend en outre :
l'acquisition d'un mouvement de la localisation tactile ;
la détermination d'une localisation de la première aire préréglée en fonction de la localisation tactile, et l'agrandissement et l'affichage du texte dans la première aire préréglée ; et en même temps,
la détermination d'une localisation de la deuxième aire préréglée en fonction du mouvement de la localisation tactile, et la réduction et l'affichage du texte dans la deuxième aire préréglée, afin de permettre à l'affichage du texte de rester dans l'état initial.

4. Procédé selon la revendication 2, dans lequel après l'agrandissement et l'affichage du texte dans une première aire préréglée en fonction de la saisie, et en même temps, la réduction et l'affichage du texte dans une deuxième aire préréglée, le procédé comprend en outre :
l'affichage, à proximité de la localisation tactile, d'un caractère ou d'un graphisme ;
l'acquisition d'un mouvement de la localisation tactile ;
la détermination d'une localisation d'affichage du caractère ou du graphisme en fonction du mouvement de la localisation tactile ; et
l'affichage du caractère ou du graphisme en fonction de la localisation d'affichage.

5. Procédé selon la revendication 4, dans lequel si le caractère ou le graphisme se trouve dans la première aire préréglée, le caractère ou le graphisme est agrandi et affiché.

6. Procédé selon la revendication 1, dans lequel l'acquisition d'une saisie d'un utilisateur comprend l'acquisition d'un caractère particulier,
l'agrandissement et l'affichage du texte dans une première aire préréglée comprennent spécifiquement : l'agrandissement et l'affichage du caractère particulier ; et
la réduction et l'affichage du texte dans une deuxième aire préréglée comprennent spécifiquement : la réduction et l'affichage du texte dans une aire, d'au moins un caractère ou d'au moins un pixel, à proximité du caractère particulier.

7. Procédé selon la revendication 6, dans lequel l'acquisition d'un caractère particulier comprend spécifiquement :
l'acquisition du caractère particulier en fonction d'un caractère introduit par l'utilisateur ; ou
l'acquisition du caractère particulier en fonction d'une instruction introduite par l'utilisateur.

8. Procédé selon l'une quelconque des revendications 1 à 7, dans lequel durant l'agrandissement et l'affichage du texte dans une première aire préréglée en fonction de la localisation tactile, et en même temps, la réduction et l'affichage du texte dans une deuxième aire préréglée, afin de maintenir l'affichage de la rangée du texte dans la rangée d'origine, le procédé comprend en outre :
l'affichage d'au moins une partie du texte en fonction d'une taille initiale.

9. Appareil à écran tactile, l'appareil comprenant :
une unité d'affichage (201), configurée de façon à afficher le texte ; et
une unité d'acquisition (202), configurée de façon à acquérir une saisie d'un utilisateur, l'unité d'acquisition est configurée spécifiquement de façon à acquérir une localisation tactile de l'utilisateur, où
l'unité d'affichage est configurée en outre de façon à déterminer le fait que la localisation tactile de l'utilisateur se trouve sur la rangée du texte, agrandir et afficher le texte dans une première aire préréglée de la rangée en fonction de la localisation tactile de l'utilisateur acquise par l'unité d'acquisition, et en même temps, réduire et afficher le texte dans une deuxième aire préréglée de la rangée, afin de maintenir l'affichage de la rangée de texte affichée dans la rangée d'origine ;
l'agrandissement et l'affichage du texte dans une première aire préréglée de la rangée comprennent : l'agrandissement et l'affichage d'un caractère et l'espacement de caractères dans le texte dans la première aire préréglée de la rangée ; et
la réduction et l'affichage du texte dans une deuxième aire préréglée de la rangée comprennent : la réduction et l'affichage d'un caractère et l'espacement de caractères dans le texte dans la deuxième aire préréglée de la rangée.

10. Appareil à écran tactile selon la revendication 9, dans lequel
l'unité d'affichage est configurée spécifiquement de façon à : en fonction de la localisation tactile acquise par l'unité d'acquisition, en fonction de la localisation tactile acquise par le texte dans une aire, d'au moins un caractère ou d'au moins un pixel, à proximité de la localisation tactile, et en même temps, réduire et afficher le texte dans une aire, d'au moins un caractère ou d'au moins un pixel, à proximité de la première aire préréglée et à l'extérieur de la première aire préréglée.

11. Appareil à écran tactile selon la revendication 10, dans lequel
l'unité d'acquisition est configurée en outre spécifiquement de façon à acquérir un mouvement de la localisation tactile, et acquérir une localisation de la première aire préréglée en fonction du mouvement de la localisation tactile et/ou acquérir une localisation de la deuxième aire préréglée en fonction du mouvement de la localisation tactile ; et
l'unité d'affichage est configurée en outre spécifiquement de façon à agrandir et afficher le texte dans la première aire préréglée et en même temps, réduire et afficher le texte dans la deuxième aire préréglée en fonction de la localisation de la première aire préréglée et de la localisation de la deuxième aire préréglée qui sont acquises par l'unité d'acquisition.

12. Appareil à écran tactile selon la revendication 10 ou 11, dans lequel
l'unité d'affichage est configurée en outre spécifiquement de façon à afficher, à proximité de la localisation tactile, un caractère ou un graphisme ;
l'unité d'acquisition est configurée en outre spécifiquement de façon à acquérir le mouvement de la localisation tactile, et acquérir une localisation d'affichage du caractère ou du graphisme en fonction du mouvement de la localisation tactile ; et
l'unité d'affichage est configurée en outre spécifiquement de façon à afficher le caractère ou le graphisme en fonction de la localisation d'affichage acquise par l'unité d'acquisition.

13. Appareil à écran tactile selon la revendication 12, dans lequel
l'unité d'affichage est configurée en outre spécifiquement de façon à : si le caractère ou le graphisme se trouve dans la première aire préréglée, agrandir et afficher le caractère ou le graphisme.

14. Appareil à écran tactile selon la revendication 9, dans lequel
l'unité d'acquisition est configurée en outre spécifiquement de façon à acquérir un caractère particulier ; et
l'unité d'affichage est configurée en outre spécifiquement de façon à agrandir et afficher le caractère particulier en fonction du caractère particulier acquis par l'unité d'acquisition, et en même temps, réduire et afficher le texte dans une aire, d'au moins un caractère ou d'au moins un pixel, à proximité du caractère particulier.

15. Appareil à écran tactile selon l'une quelconque des revendications 9 à 14, dans lequel l'unité d'affichage est configurée en outre de façon à afficher au moins une partie du texte en fonction d'une taille initiale.
